# EUROPÄISCHE PATENTANMELDUNG

(11) **EP 2 289 752 A2**
(43) Veröffentlichungstag der Anmeldung: **02.03.2011**
(21) Anmeldenummer: 10173428.3
(22) Anmeldetag: 19.08.2010
(51) Int. Cl.: B60W 20/00, B60W 30/18, B60W 10/06, B60W 10/08, B60W 10/02

(54) **Verfahren zum Betreiben eines Antriebsstrangs**

(30) Priorität: 31.08.2009 DE 102009029036
(71) Anmelder: ZF Friedrichshafen AG, 88038 Friedrichshafen (DE)
(72) Erfinder: Kaltenbach, Johannes, 88048 Friedrichshafen (DE); Borntraeger, Kai, 88085 Langenargen (DE); Mueller, Axel Michael, 88048 Friedrichshafen (DE)

(57) **Zusammenfassung**

Die Erfindung betrifft ein Verfahren zum Betreiben eines Antriebsstrangs, wobei der Antriebsstrang einen Hybridantrieb mit einem Verbrennungsmotor und einer elektrischen Maschine aufweist, wobei zwischen den Verbrennungsmotor und die elektrische Maschine eine Kupplung geschaltet ist, wobei zwischen die elektrische Maschine und einen Abtrieb ein Getriebe geschaltet ist, und wobei zwischen die elektrische Maschine und den Abtrieb weiterhin ein Anfahrelement geschaltet ist. Erfindungsgemäß wird dann, wenn die zwischen den Verbrennungsmotor und die elektrische Maschine geschaltete Kupplung und das Anfahrelement geöffnet sind und die elektrische Maschine stillsteht und kurzgeschlossen ist, zum Anfahren des Antriebsstrangs a) zunächst der Verbrennungsmotor auf eine Drehzahl beschleunigt, die von einem zu überwindenden Kurzschlussdrehmoment der elektrischen Maschine abhängig ist; b) anschließend die zwischen den Verbrennungsmotor und die elektrische Maschine geschaltete Kupplung geschlossen; c) darauffolgend der Verbrennungsmotor auf eine vom Fahrerwunsch abhängige Anfahrdrehzahl gebracht und das Anfahrelement geschlossen.

## Beschreibung

Die Erfindung betrifft ein Verfahren zum Betreiben eines Antriebsstrangs eines Kraftfahrzeugs nach dem Oberbegriff des Anspruchs 1.

Die Hauptkomponenten eines Antriebsstrangs sind ein Antriebsaggregat und ein Getriebe. Das Getriebe wandelt Drehzahlen und Drehmomente und stellt so ein Zugkraftangebot des Antriebsaggregats an einem Abtrieb des Antriebsstrangs bereit. Die hier vorliegende Erfindung betrifft ein Verfahren zum Betreiben eines Antriebsstrangs mit einem als Hybridantrieb ausgebildeten Antriebsaggregat, wobei zwischen den Verbrennungsmotor des Hybridantriebs und die elektrische Maschine desselben eine Kupplung geschaltet ist, und wobei zwischen die elektrische Maschine und den Abtrieb ein weiteres als Anfahrelement dienendes, als Kupplung oder Bremse ausgebildetes, getriebeinternes oder getriebeexternes Reibelement geschaltet ist.

Die elektrische Maschine eines Hybridantriebs kann motorisch oder generatorisch betrieben werden. Im motorischen Betrieb der elektrischen Maschine des Hybridantriebs wandelt dieselbe elektrische Energie in mechanische Energie zur Bereitstellung eines Antriebsmoments. Im generatorischen Betrieb hingegen wandelt die elektrische Maschine des Hybridantriebs mechanische Energie in elektrische Energie, um zum Beispiel einen elektrischen Energiespeicher des Hybridantriebs zu laden.

Unter gewissen Umständen kann es erforderlich sein, dass die elektrische Maschine des Hybridantriebs bezogen auf den elektrischen Energiespeicher des Antriebsstrangs ein elektrisch neutrales Verhalten zeigt, dass die elektrische Maschine den elektrischen Energiespeicher also weder auflädt noch entlädt. In diesem Fall ist die elektrische Maschine des Hybridantriebs dann kurzgeschlossen.

Insbesondere dann, wenn die elektrische Maschine als permanentmagneterregte Synchronmaschine (PSM) ausgebildet ist, ist bei der Beschleunigung einer kurzgeschlossenen elektrischen Maschine ausgehend vom Stillstand ein Kurzschlussverhalten feststellbar, bei welchem ein relativ hohes Moment an der elektrischen Maschine überwunden werden muss, um dieselbe ausgehend vom Stillstand auf eine Zieldrehzahl hochzufahren bzw. zu beschleunigen. Dann, wenn ein Antriebsstrang mit einem Hybridantrieb und kurzgeschlossener elektrischer Maschine anfahren soll, bremst demnach die elektrische Maschine bei relativ geringen Drehzahlen stark ab, was sich negativ auf das Anfahrverhalten auswirkt. Bislang sind keine Verfahren zum Betreiben eines Antriebsstrangs mit einem Hybridantrieb bekannt, die das Anfahren bei kurzgeschlossener elektrischer Maschine sicher und komfortabel gestalten.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren zum Betreiben eines Antriebsstrangs eines Kraftfahrzeugs gemäß Anspruch 1 gelöst. Erfindungsgemäß wird dann, wenn die zwischen den Verbrennungsmotor und die elektrische Maschine geschaltete Kupplung und das getriebeinterne oder getriebeexterne Anfahrelement geöffnet sind und die elektrische Maschine stillsteht und kurzgeschlossen ist, zum Anfahren des Antriebsstrangs a) zunächst der Verbrennungsmotor auf eine Drehzahl beschleunigt, die von einem zu überwindenden Kurzschlussdrehmoment der elektrischen Maschine abhängig ist; b) anschließend die zwischen den Verbrennungsmotor und die elektrische Maschine geschaltete Kupplung geschlossen; c) darauffolgend der Verbrennungsmotor auf eine vom Fahrerwunsch abhängige Anfahrdrehzahl gebracht und das getriebeinterne oder getriebeexterne Anfahrelement geschlossen.

Mit der hier vorliegenden Erfindung wird ein Verfahren zum Betreiben eines Antriebsstrangs mit einem Hybridantrieb vorgeschlagen, bei welchem ein sicheres und komfortables Anfahren auch bei kurzgeschlossener elektrischer Maschine möglich ist.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein exemplarisches Antriebsstrangschema eines Kraftfahr- zeugs, bei welchem das erfindungsgemäße Verfahren einsetz- bar ist;
- Fig. 2: ein Diagramm zur Verdeutlichung des Verhaltens einer kurzge- schlossenen elektrischen Maschine; und
- Fig. 3: ein Diagramm zur Verdeutlichung des erfindungsgemäßen Ver- fahrens.

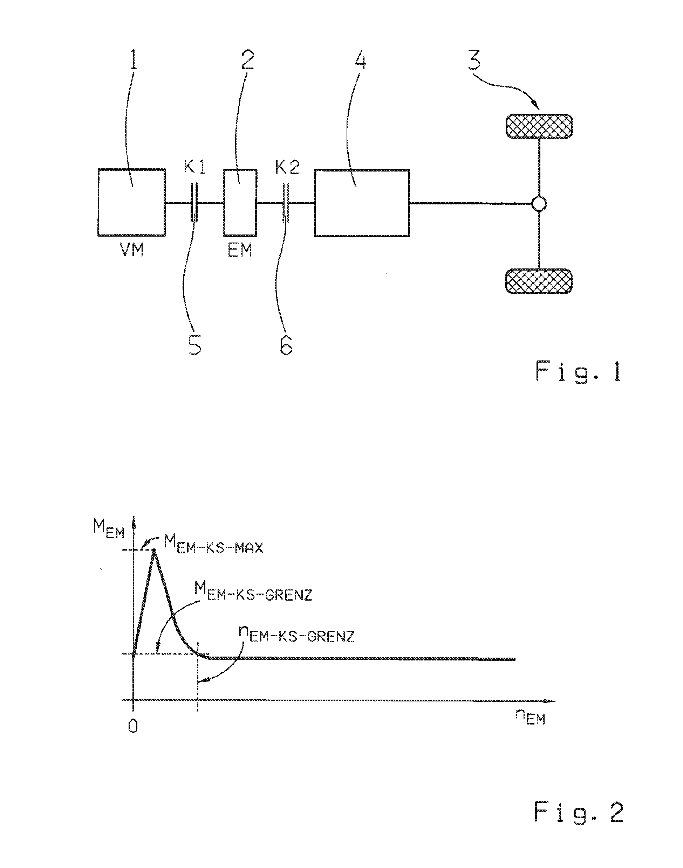

Die hier vorliegende Erfindung zum Betreiben eines Antriebsstrangs eines Kraftfahrzeugs wird nachfolgend unter Bezugnahme auf Fig. 1 bis 3 im Detail beschrieben.

Fig. 1 zeigt stark schematisiert einen möglichen Antriebsstrang, bei dem das erfindungsgemäße Verfahren zum Einsatz kommen kann. So zeigt Fig. 1 einen Antriebsstrang mit einem Hybridantrieb, wobei ein Hybridantrieb einen Verbrennungsmotor 1 und eine elektrische Maschine 2 umfasst. Zwischen den vom Verbrennungsmotor 1 und der elektrischen Maschine 2 gebildeten Hybridantrieb und einen Abtrieb 3 ist ein Getriebe 4 geschaltet, wobei das Getriebe 4 ein Zugkraftangebot des Hybridantriebs an dem Abtrieb 3 bereitstellt.

Zwischen den Verbrennungsmotor 1 des Hybridantriebs und die elektrische Maschine 2 desselben ist eine Kupplung 5 geschaltet, die dann, wenn der Verbrennungsmotor 1 vom Abtrieb 3 abgekoppelt ist, geöffnet ist.

Im Ausführungsbeispiel der Fig. 1 ist zwischen die elektrische Maschine 2 und das Getriebe 4 ein getriebeexternes, als Kupplung 6 ausgebildetes Anfahrelement geschaltet. Das Anfahrelement kann auch als getriebeinterne Kupplung oder Bremse ausgebildet sein.

Zwischen einen Rotor der elektrischen Maschine 2 und eine mechanische Welle, die im Ausführungsbeispiel der Fig. 1 mit den Kupplungen 5 und 6 verbunden ist, kann eine Konstantübersetzung geschaltet sein.

Bei den Antriebsstrang der Fig. 1 handelt es sich um einen Parallelhybrid-Antriebsstrang. Derselbe verfügt zusätzlich zu den in Fig. 1 gezeigten Baugruppen über einen elektrischen Energiespeicher sowie steuerungsseitige Baugruppen.

Die elektrische Maschine 2 eines solchen Antriebsstrangs kann motorisch und generatorisch betrieben werden. Im motorischen Betrieb entlädt die elektrische Maschine 2 des Hybridantriebs den elektrischen Energiespeicher und wandelt elektrische Energie in mechanische Energie, um am Abtrieb 3 ein Antriebsmoment bereitzustellen. Im generatorischen Betrieb hingegen, so zum Beispiel beim Bremsen des Antriebsstrangs, wird hingegen die elektrische Maschine 2 des Hybridantriebs generatorisch betrieben, um den elektrischen Energiespeicher des Antriebsstrangs aufzuladen.

In gewissen Betriebszuständen des Antriebsstrangs kann es erforderlich sein, dass die elektrische Maschine 2 des Hybridantriebs gegenüber dem nicht gezeigten, elektrischen Energiespeicher ein elektrisch neutrales Verhalten aufweist. In diesem Fall ist die elektrische Maschine 2 kurzgeschlossen.

Fig. 2 zeigt ein Diagramm, in welchem das Kurzschlussverhalten einer als permanentmagneterregte Synchronmaschine ausgebildeten elektrischen Maschine 2 eines Hybridantriebs gezeigt ist, wobei in Fig. 2 über der Drehzahl n_{EM} der elektrischen Maschine 2 das Bremsmoment M_{EM} derselben im Kurzschlussbetrieb aufgetragen ist. Andere elektrischen Maschinen 2 können ein ähnliches Kurzschlussverhalten aufweisen.

Fig. 2 kann entnommen werden, dass dann, wenn eine elektrische Maschine 2 im Kurzschlussbetrieb derselben aus dem Stillstand (n_{EM}=0) heraus beschleunigt werden soll, zunächst bei relativ kleinen Drehzahlen das zu überwindende Moment M_{EM} bis auf einen Maximalwert bzw. ein Kurzschlussdrehmoment M_{EM}-_{KS}-_{MAX} ansteigt und anschließend auf den Wert M_{EM-KS-GRENZ} absinkt, wobei dann, wenn die elektrische Maschine 2 im Kurzschlussbetrieb die Drehzahl n_{EM-KS-GRENZ} erreicht hat, das im Kurzschlussbetrieb der elektrischen Maschine 2 zu überwindende Moment in etwa gleich bleibt. Beim Kurzschlussdrehmoment handelt es sich um eine von der elektrischen Maschine 2 abhängige, ermittelbare Kenngröße.

Es besteht daher im Kurzschlussbetrieb der elektrischen Maschine 2 das Problem, dass die elektrische Maschine 2 bei relativ kleinen Drehzahlen n_{EM} relativ stark bremst, was insbesondere das Anfahrverhalten eines Antriebsstrangs mit einem Hybridantrieb negativ beeinflusst.

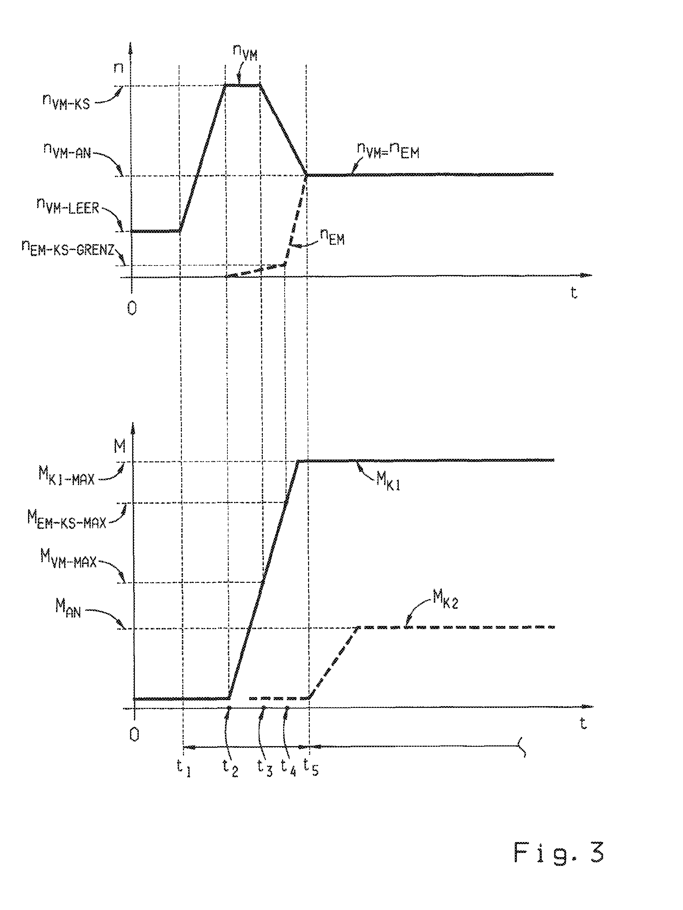

Die hier vorliegende Erfindung betrifft demnach solche Details zum Betreiben eines Antriebsstrangs mit einem Hybridantrieb, bei welchem ein Anfahren bei kurzgeschlossener elektrischer Maschine 2 sicher und mit hohem Komfort möglich ist. Das erfindungsgemäße Verfahren wird nachfolgend unter Bezugnahme auf Fig. 3 im Detail beschrieben.

Zum Anfahren eines Antriebsstrangs mit einem Hybridantrieb bei kurzgeschlossener elektrischer Maschine 2 soll davon ausgegangen werden, dass zum Zeitpunkt t=0 der Antriebsstrang eine Ausgangssituation aufweist, in welcher der Verbrennungsmotor 1 mit einer Leerlaufdrehzahl n_{VM-LEER} betrieben wird, in welcher die elektrische Maschine 2 des Hybridantriebs stillsteht (n_{EM}=0) und in welcher sowohl die zwischen dem Verbrennungsmotor 1 sowie die elektrische Maschine 2 geschaltete Kupplung 5, die auch als Kupplung K1 bezeichnet wird, als auch das zwischen den Hybridantrieb und den Abtrieb 3 geschaltete Anfahrelement, welches im Ausführungsbeispiel der Fig. 1 als getriebeexterne Kupplung 6, die auch als Kupplung K2 bezeichnet wird, ausgeführt ist, geöffnet sind.

Um bei einem Antriebsstrang mit Hybridantrieb, dessen elektrische Maschine 2 kurzgeschlossen ist, aufgehend von einer solchen Ausgangssituation des Antriebsstrangs anzufahren, wird zunächst der Verbrennungsmotor 1 ausgehend von seiner Leerlaufdrehzahl n_{VM-LEER} auf eine Drehzahl n_{VM-KS} beschleunigt, die von dem zu überwindenden Kurzschlussdrehmoment M_{EM-KS-MAX} der kurzgeschlossenen elektrischen Maschine 2 des Hybridantriebs abhängig ist. Je größer das Kurzschlussdrehmoment M_{EM-KS-MAX} der kurzgeschlossenen elektrischen Maschine 2 ist, desto größer ist die Drehzahl n_{VM-KS}, auf welche der Verbrennungsmotor 1 beschleunigt wird.

Das Beschleunigen des Verbrennungsmotors 1 ausgehend von seiner Leerlaufdrehzahl n_{VM-LEER} auf die vom zu überwindenden Kurzschlussdrehmoment abhängige Drehzahl n_{VM-KS} erfolgt gemäß Fig. 3 zwischen den Zeitpunkten t₁ und t₂, wobei während dieser Zeitspanne eine Drehzahlregelung des Verbrennungsmotor 1 über dem vom Verbrennungsmotor bereitgestellten Moment erfolgt. Gemäß Fig. 3 erfolgt die Drehzahlanhebung des Verbrennungsmotors 1 von der Leerlaufdrehzahl n_{VM-LEER} auf die vom zu überwindenden Kurzschlussdrehmoment abhängige Drehzahl n_{VM-KS} linear entlang einer Rampe. Es kann hier auch eine nicht-lineare Drehzahlanhebung erfolgen.

Anschließend an das Beschleunigen des Verbrennungsmotors 1 auf die vom zu überwindenden Kurzschlussdrehmoment M_{EM-KS-MAX} abhängige Drehzahl n_{VM-KS}, also beginnend mit dem Zeitpunkt t₂, wird die zwischen den Verbrennungsmotor 1 und die elektrische Maschine 2 des Hybridantriebs geschaltete Kupplung 5, also die Kupplung K1, geschlossen, wobei das Schließen der Kupplung 5 im Ausführungsbeispiel der Fig. 3 linear entlang einer Rampe erfolgt. Es kann hier auch ein nicht-lineares Schließen der Kupplung 5 erfolgen.

Es sei darauf hingewiesen, dass vorzugsweise zeitlich parallel mit dem Beschleunigen des Verbrennungsmotors 1 auf die vom zu überwindenden Kurzschlussdrehmoment M_{EM-KS-MAX} der elektrischen Maschine 2 abhängige Drehzahl n_{VM-KS}, also während der Zeitspanne zwischen den Zeitpunkten t₁ und t₂, die zwischen den Verbrennungsmotor 1 und die elektrische Maschine 2 des Hybridantriebs geschaltete Kupplung 5 bis zum Anlegpunkt teilweise geschlossen wird, sodass zum Zeitpunkt t₂ die zwischen den Verbrennungsmotor 1 und die elektrische Maschine 2 geschaltete Kupplung 5 aufgehend vom Anlegepunkt weiter geschlossen werden kann, sodass dieselbe unmittelbar zum Zeitpunkt t₂ den Verbrennungsmotor 1 an die elektrische Maschine 2 koppelt.

Beginnend mit dem Zeitpunkt t₂ wird die elektrische Maschine 2 beschleunigt, wobei dann, wenn zum Zeitpunkt t₃ der Verbrennungsmotor 1 sein maximal bereitstellbares Moment M_{VM-MAX} erreicht hat, die Drehzahl des Verbrennungsmotors n_{VM} wieder abnimmt. Beim Schließen der zwischen den Verbrennungsmotor 1 und die elektrische Maschine 2 geschalteten Kupplung 5 wird vorzugsweise die sich ausbildende Drehzahl n_{VM} des Verbrennungsmotors 1 überwacht, wobei dann, wenn die Drehzahl n_{VM} des Verbrennungsmotors 1 unter einen Grenzwert absinkt, die zwischen den Verbrennungsmotor 1 und die elektrische Maschine 2 geschaltete Kupplung 5 wieder geöffnet wird, um so dann den Anfahrvorgang unter Erhöhung der vom zu überwindenden Kurzschlussmoment M_{EM-KS-MAX} abhängigen Drehzahl n_{VM-KS} neu zu starten.

In Fig. 3 ist das Kurzschlussdrehmoment M_{EM-KS-MAX} der kurzgeschlossenen elektrischen Maschine 2 größer als das von dem Verbrennungsmotor maximal aufbringbare Drehmoment M_{VM-MAX}, wobei in Fig. 3 zum Zeitpunkt t₄ die zwischen Verbrennungsmotor 1 und die elektrische Maschine 2 geschaltete Kupplung 5, also die Kupplung K1, das Kurzschlussdrehmoment M_{EM-KS-MAX} überträgt, sodass beginnend mit dem Zeitpunkt t₄ die elektrische Maschine stärker beschleunigt wird, bis zum Zeitpunkt t₅ bei vollständig geschlossener Kupplung 5 die Drehzahl n_{VM} des Verbrennungsmotors 1 der Drehzahl n_{EM} der elektrischen Maschine 2 entspricht.

Zwischen den Zeitpunkten t₁ und t₅ im Diagramm der Fig. 3 wird demnach der Verbrennungsmotor 1 mit einer Drehzahl betrieben, die ausreichend ist, um das Kurzschlussdrehmoment M_{EM-KS-MAX} der kurzgeschlossenen elektrischen Maschine 2 zu überwinden. Dabei wird dann, wenn das Kurzschlussdrehmoment M_{EM-KS-MAX} der kurzgeschlossenen elektrischen Maschine 2 größer ist als das vom Verbrennungsmotor 1 maximal bereitstellbare Moment M_{VM-MAX}, der Verbrennungsmotor 1 auf eine Drehzahl n_{VM} beschleunigt, sodass die Schwungmasse des Verbrennungsmotors 1 zur Überwindung des Kurzschlussdrehmoments der kurzgeschlossenen elektrischen Maschine 2 des Hybridantriebs ausgenutzt werden kann.

Wie bereits ausgeführt, wird während dem Schließen der Kupplung 5, die zwischen den Verbrennungsmotor 1 und die elektrische Maschine 2 geschaltet ist, die sich ausbildende Drehzahl n_{VM} des Verbrennungsmotors 1 überwacht, wobei dann, wenn dieselbe unter einen Grenzwert, insbesondere unter die Leerlaufdrehzahl desselben, absinkt, die Kupplung 5 wieder geöffnet wird, um ein Abwürgen des Verbrennungsmotors 1 zu verhindern und nachfolgend unter Erhöhung der Drehzahl n_{VM-KS} den Anfahrvorgang zu wiederholen.

Die hierbei angehobene Drehzahl n_{VM-KS} kann als Adaptionswert für einen nachfolgenden Anfahrvorgang bei kurzgeschlossener elektrischer Maschine gespeichert werden. In definierten Abständen, zum Beispiel nach einer definierten Anzahl von Betriebsstunden bzw. gefahrenen Kilometern, kann jedoch der Adaptionswert wieder reduziert werden, um zum Beispiel einem sich verändernden Verhalten der elektrischen Maschine 2, insbesondere einem sich verändernden Kurzschlussverhalten derselben, und/oder des Verbrennungsmotors 1 und/oder der Kupplung 5 zum Beispiel in Folge eines Verschleißes Rechnung zu tragen.

Anschließend an das Schließen der zwischen den Verbrennungsmotor 1 und die elektrische Maschine geschalteten Kupplung 5 wird beginnend mit dem Zeitpunkt t₅ der Verbrennungsmotor 1 auf eine vom Fahrerwunsch abhängige Drehzahl bzw. die Anfahrdrehzahl n_{VM-AN} gebracht und das Anfahrelement 6, welches im Ausführungsbeispiel der Fig. 1 als getriebeexterne Kupplung K2 ausgeführt ist, wird geschlossen. Wenn das Anfahrelement 6 bzw. die Kupplung K2 vollständig geschlossen ist, überträgt dieselbe das vom Fahrerwunsch abhängige, gewünschte Anfahrmoment M_{AN}.

Zeitlich parallel zum Schließen der zwischen den Verbrennungsmotor 1 und die elektrische Maschine 2 geschalteten Kupplung 5 zwischen den Zeitpunkten t₂ und t₅ kann das Anfahrelement 6 bis zum Anlegpunkt teilweise geschlossen werden, so dass bereits zum Zeitpunkt t₅ das Anfahrelement bis zum Anlegpunkt desselben teilweise geschlossen ist.

### Bezugszeichen

- 1: Verbrennungsmotor
- 2: elektrische Maschine
- 3: Abtrieb
- 4: Getriebe
- 5: Kupplung
- 6: Kupplung

## Patentansprüche

1. Verfahren zum Betreiben eines Antriebsstrangs eines Kraftfahrzeugs, wobei der Antriebsstrang als Antriebsaggregat einen Hybridantrieb mit einem Verbrennungsmotor und einer elektrischen Maschine aufweist, wobei zwischen den Verbrennungsmotor des Hybridantriebs und die elektrische Maschine des Hybridantriebs eine Kupplung geschaltet ist, wobei zwischen die elektrische Maschine des Hybridantriebs und einen Abtrieb des Antriebsstrangs ein Getriebe geschaltet ist, und wobei zwischen die elektrische Maschine des Hybridantriebs und den Abtrieb weiterhin ein getriebeinternes oder getriebeexternes Anfahrelement geschaltet ist, **dadurch gekennzeichnet, dass** dann, wenn die zwischen den Verbrennungsmotor und die elektrische Maschine geschaltete Kupplung und das getriebeinterne oder getriebeexterne Anfahrelement geöffnet sind und die elektrische Maschine stillsteht und kurzgeschlossen ist, zum Anfahren des Antriebsstrangs
a) zunächst der Verbrennungsmotor auf eine Drehzahl beschleunigt wird, die von einem zu überwindenden Kurzschlussdrehmoment der elektrischen Maschine abhängig ist,
b) anschließend die zwischen den Verbrennungsmotor und die elektrische Maschine geschaltete Kupplung geschlossen wird,
c) darauffolgend der Verbrennungsmotor auf eine vom Fahrerwunsch abhängige Anfahrdrehzahl gebracht und das getriebeinterne oder getriebeexterne Anfahrelement geschlossen wird.

2. Verfahren nach Anspruch 1, **dadurch gekennzeichnet, dass** in Schritt
a) zeitlich parallel zum Beschleunigen des Verbrennungsmotors auf die von dem zu überwindenden Kurzschlussdrehmoment der elektrischen Maschine abhängige Drehzahl die zwischen den Verbrennungsmotor und die elektrische Maschine geschaltete Kupplung bis zum Anlegpunkt derselben teilweise geschlossen wird.

3. Verfahren nach Anspruch 1 oder 2, **dadurch gekennzeichnet, dass** in Schritt b) beim Schließen der zwischen den Verbrennungsmotor und die elektrische Maschine geschalteten Kupplung die Drehzahl des Verbrennungsmotors überwacht wird, wobei dann, wenn die die Drehzahl desselben unter einen Grenzwert absinkt, die zwischen den Verbrennungsmotor und die elektrische Maschine geschaltete Kupplung geöffnet und der Anfahrvorgang unter Erhöhung der vom zu überwindenden Kurzschlussdrehmoment abhängigen Drehzahl neu gestartet wird.

4. Verfahren nach Anspruch 3, **dadurch gekennzeichnet, dass** hierbei die die vom zu überwindenden Kurzschlussdrehmoment abhängige, erhöhte Drehzahl des Verbrennungsmotors als Adaptionswert für ein Anfahren bei kurzgeschlossener elektrischer Maschine gespeichert wird.

5. Verfahren nach Anspruch 4, **dadurch gekennzeichnet, dass** in definierten Abständen der Adaptionswert reduziert wird.

6. Verfahren nach einem der Ansprüche 1 bis 5, **dadurch gekennzeichnet, dass** in Schritt b) die zwischen den Verbrennungsmotor und die elektrische Maschine geschaltete Kupplung ausgehend vom Anlegpunkt vollständig geschlossen wird, sodass der Verbrennungsmotor und die elektrische Maschine mit gleicher Drehzahl laufen.

7. Verfahren nach einem der Ansprüche 1 bis 6, **dadurch gekennzeichnet, dass** in Schritt c) das getriebeinterne oder getriebeexterne Anfahrelement vollständig geschlossen wird.

8. Verfahren nach Anspruch 7, **dadurch gekennzeichnet, dass** in Schritt b) zeitlich parallel zum Schließen der zwischen den Verbrennungsmotor und die elektrische Maschine geschalteten Kupplung das Anfahrelement bis zum Anlegpunkt desselben teilweise geschlossen wird.
